# EUROPEAN PATENT SPECIFICATION

(11) **EP 3 003 839 B1**
(45) Date of publication and mention of the grant of the patent: **28.03.2018**
(21) Application number: 13886098.6
(22) Date of filing: 27.05.2013
(51) Int. Cl.: B62D 35/00, B62D 33/04, B60J 5/06

(54) **COMMERCIAL VEHICLE CARGO BOX COMPARTMENT**
FRACHTBOXFACH FÜR NUTZFAHRZEUG
SOUTE DE CARGO DE VEHICULE COMMERCIAL

(43) Date of publication of application: 13.04.2016
(73) Proprietor: Volvo Truck Corporation, 405 08 Gothenburg (SE)
(72) Inventor: HEATH, Martin, SE-432 51 Torslanda se (SE)
(74) Representative: Volvo Technology Corporation
(86) International application number: PCT/SE2013/000086
(87) International publication number: WO 2014/193273

(56) References cited:
- DE-A1- 10 316 105
- DE-A1-102010 027 716
- DE-U1-202012 000 070
- GB-A- 2 079 684
- JP-U- S6 441 481
- US-A- 4 508 380
- US-A- 4 818 015
- US-B1- 6 286 894
- US-B1- 6 286 894
- US-B1- 6 666 498

## Description

### TECHNICAL FIELD

The invention relates to a vehicle cargo box compartment comprising front and rear wall panels, a floor bed, a roof and at least one side curtain which can be moved between a deployed position and a position for loading and unloading said cargo compartment from the side of the vehicle, wherein the side curtain during said movement is guided at the roof by a rail. The invention also relates to a vehicle comprising the cargo box compartment.

### BACKGROUND

Box type cargo compartments are commonly used on commercial cargo vehicles in transport of pallet goods. The box type cargo compartment offers weather protection for the goods and may allow goods to be loaded/unloaded quickly when the box is opened.

In parts of the world the total length of a commercial vehicle is regulated. For economic efficiency, the shape of the commercial cargo vehicle has traditionally been adapted to maximize the loading capacity within the total length. Usually, commercial cargo vehicles have an essentially box shaped cargo compartment or trailer. This shape is not aerodynamically efficient in view of fuel efficiency. In recent years, there has been an increased interest in improving the aerodynamic properties of commercial cargo vehicles. A major reason for this is increased fuel costs and exhaust limitations.

A more aerodynamically designed rear part of the cargo compartment could result in increased vehicle length or reduced loading capacity. In order to improve the aerodynamic properties and achieve a reduction of the wind resistance, the rear end of a trailer or load compartment has previously been modified in different ways. DE202012000070U and US6286894 disclose commercial cargo vehicles as described above. A very high percentage of load haulage does not utilise 100% of the available space within the load volume. To improve the efficiency of the load volume under such conditions would be to change the shape of the load volume for improved aerodynamics. This can be achieved in many ways with "Hard (Panel)-sided" trailer types.

For example, US 4,508,380 shows a truck body/trailer box where the trailing edge region has rigid, vertical panels which can be repositioned between a longitudinal blunt configuration and a rearwards tapering, more aerodynamic configuration which can be used when the cargo compartment box is not fully utilized. The repositioning of the rigid panels tends to be a time consuming process for the driver of the vehicle which normally has a narrow time-frame for delivering the cargo. Thus, there is a risk that the aerodynamic feature will not be deployed on the vehicle, if time is short.

Thus, it is desirable to provide an aerodynamic end portion for a commercial truck or a trailer, which can be easily and quickly deployed when the vehicle is not fully loaded. Preferably, the aerodynamic end portion should be removed and re-installed without adding additional width to the vehicle, and without affecting the loading/unloading conditions.

### SUMMARY OF THE INVENTION

According to an aspect of the invention, the above is at least partly met by a commercial vehicle cargo box compartment according to the invention, which comprises front and rear wall panels, a load bed floor, a roof and at least one side curtain which can be moved between a deployed position and a position for loading and unloading said cargo compartment from the side of the vehicle, wherein the side curtain during said movement is guided at the roof by a rail, and wherein the rail is forked to allow the side curtain to be deployed in more than one position, for providing adjustable width of the cargo compartment.

The invention is based on the understanding that the repositioning of a side curtain should be possible to accomplish with a minimum of effort.

According to an embodiment of the invention, the rail is provided with a rail switch which in one set position allows a rear part of the side curtain to curve inward toward the centre of the cargo compartment. Preferably, an actuator is provided for operating the roof rail switch, which actuator can be controlled via electric, hydraulic, pneumatic or mechanic control means. According to an embodiment of the invention, the actuator is remotely controlled.

The load bed floor is preferably provided with a forked rail for the bottom edge of the side curtain at the load bed floor, below the roof rail. Preferably, the forked floor rail is provided with a rail switch which in one set position allows a rear part of the side curtain to curve inward toward the centre of the cargo compartment.

According to still another embodiment of the invention, an upright post is positioned at the rear end of an outer rail, extending between the load bed floor and the roof.

Each upright post may comprise a first front post member which is mechanically connected both to the load bed floor and the roof, and a second rear post member which is movable between a first position substantially in line with the front post member and a second position substantially in line with the rear ends of the inner roof and floor rails respectively. Each post member may be manufactured as a longitudinal, hollow profile by aluminium extrusion. Preferably, the front and rear post members (25, 26), when attached together, present an aerodynamically suitable, rounded cross section.

The cargo compartment according to the invention is preferably adapted for use at a ground travelling vehicle designed as a truck vehicle or a trailer adapted to be hauled by a truck.

### BRIEF DESCRIPTION OF THE DRAWINGS

The present invention will now be described more in detail with reference to the appended drawings, where
- Figure 1: shows a partial perspective view of the roof at the rear end of an open cargo box compartment;
- Figure 2: shows a partial perspective view of the floor at the rear end of an open cargo box compartment;
- Figure 3: shows a partial perspective view of a closed cargo box compartment with side walls deployed with a tapering rear end;
- Figure 4a and 4b: are similar views as Figure 3 but with closed rear wall/door;
- Figure 5, 6: show partial plan views of a forked roof rail switch for repositioning the side curtain to the cargo box compartment in outer and inner positions, respectively;
- Figure 7, 8: show partial perspective views of means for attaching the bottom of the side curtain to the load bed in outer and inner positions, respectively;
- Figure 9: is a view from above showing attachments for the side curtain and the rear wall as shown in Figure 4a, and
- Figure 10, 11: show partial perspective views of means for attaching the bottom of the side curtain to the load bed in outer and inner positions, respectively in accordance with a second embodiment of the invention.

### DETAILED DESRIPTION

This invention focuses on cargo box compartments which has a common "Soft-sided" curtain style of side covering. Curtain sided cargo trucks and trailers tend to have flexible curtain material that is drawn along the length of the cargo box compartment, to open up at least one side for loading and unloading. The roof edge of the cargo box structure contains a rail system to guide the curtain along the side of the cargo box, so that the curtain can be drawn between an open and a closed condition. Means for fastening and tensioning are usually applied at the bottom and rear edges of the curtain. This type of side cover can be applied both to truck cargo boxes and trailer boxes.

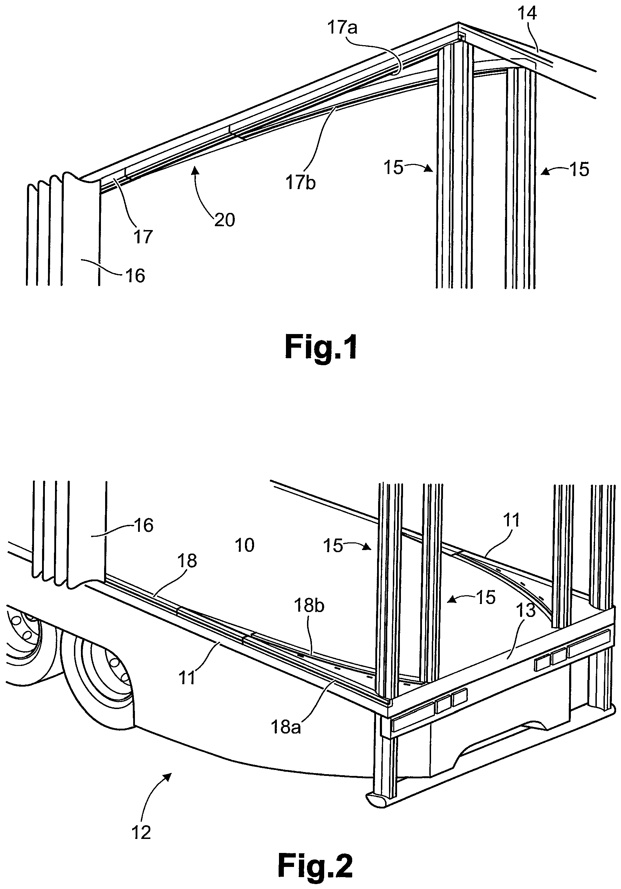

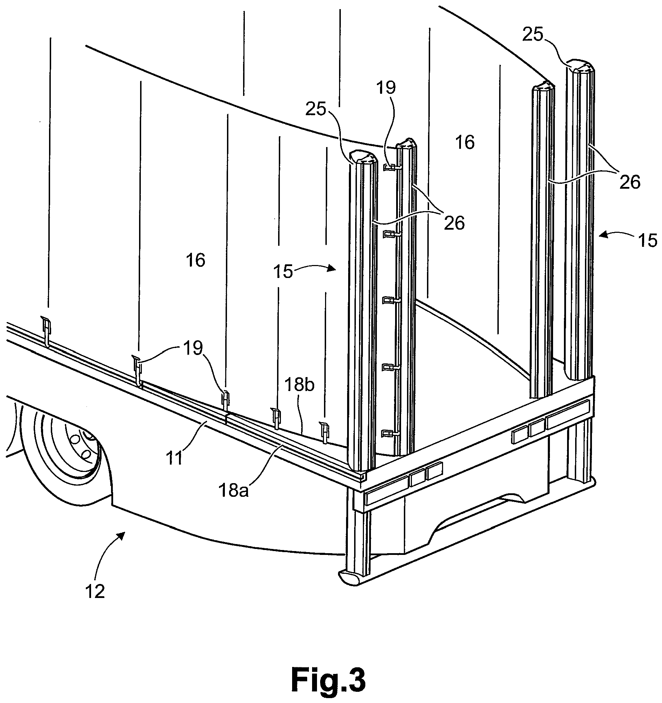

Figure 1 and 2 shows a load bed floor 10 of a truck box or a trailer. The floor 10 has parallel longitudinal sides 11 and front and rear 13 ends. A roof 14 is supported by inner and outer vertical posts 15 at the rear end of the cargo box compartment 12. A drawn aside curtain 16 hangs near the front end allowing the load bed floor 10 to be accessed from the side for loading/unloading. The curtain 16 hangs in a set of slides which are arranged to travel along a rail channel 17 (see Figure 1) which runs along the roof 14. A corresponding rail channel 18 (see Figure 2) runs along the load bed floor 10, allowing over the centre tensioning hooks 19 (see figure 3) to secure the bottom of the curtain 16 to the load bed floor 10, when the curtain is in a drawn closed position.

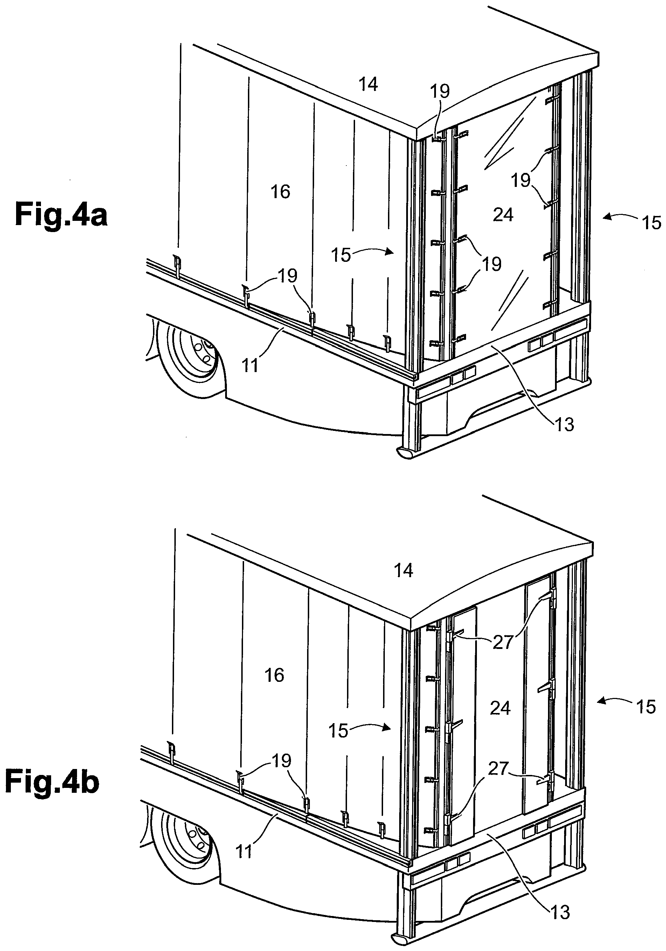

According to the invention, both the roof rail 17 and the floor rail 18 is forked with outer undeviating fork rails 17a, 18a respectively, and with curved inner fork rails 17b, 18b respectively. The forked rail portions 17a, 17b, 18a and 18b allow the rear part of the curtain 16 to be deployed in either a conventional position or in a more aerodynamic, rearward tapering position as shown in Figures 3, 4a and 4b.

Figure 3 shows the cargo box compartment without the roof 14 to illustrate the curvature of the curtain 16 when deployed in the drawn closed tapering position. The bottom of the curtain is secured to the floor rails 18, 18b by the tensioning hooks 19. Similar tensioning hooks 19 are used at the rear end of the curtain 16 for attaching the vertical rear edge of the curtain to the vertical posts 15.

Figure 4a shows the rear end of the cargo box compartment closed by means of a panel 24 attached to the inner posts 15 via tensioning hooks 19. An alternative embodiment is shown in Figure 4b, where the panel 24 is replaced by door sections hinged via door hinges 27 to the inner posts 15.

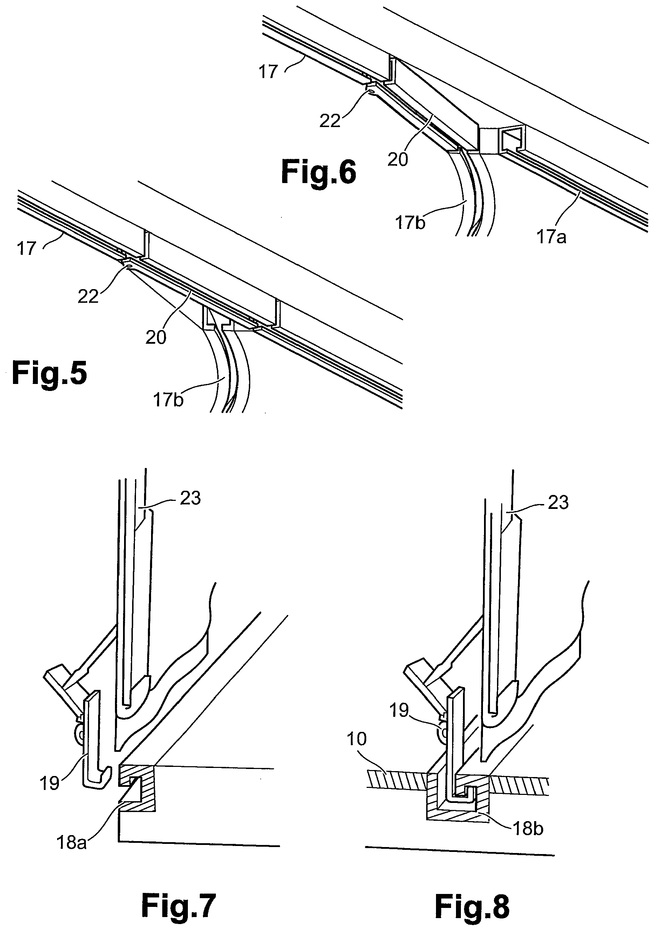

A rail switch 20 for the roof rail 17 is shown in Figures 5 and 6 comprising a rail switch segment 21 which is pivotally movable between the two forked rail portions 17a, 17b around a pivot point 22. The movable rail segment 21 enables a swift repositioning of the rear portion of the curtain 16 between the conventional position and the more aerodynamic, rearward tapering position as shown in Figures 3 and 4. The position shown in Figure 5 allows the curtain 16 to be drawn in the rail portion 17a along the outer edge of the roof to the conventional position. The position shown in Figure 6 allows the curtain 16 to be drawn in the curved rail portion 17b to the rearward tapering position.

The movable segment 21 can be moved between the two positions by means of an actuator (not shown in the drawings) which can be controlled according to well-known methods by the operator of the truck via electric, hydraulic, pneumatic or mechanic energy control means. Preferably, the actuator is remotely controlled.

Before departure, after loading/unloading cargo at a site, the operator of the truck will need to close the interior of the cargo compartment by drawing the curtain 16 and attaching the curtain edges. First the operator of the truck will decide if the curtain should be deployed in the more aerodynamic, rearward tapering position or in the conventional position. Then the rail switch segment 21 in the roof rail 17 can be repositioned accordingly to the respective roof rail fork 17a, 17b, if repositioning is needed. Finally the curtain can be drawn out along the roof rail 17 toward the post 15 to be attached by means of tensioning hooks 19 to the post 15 and to the corresponding floor rail 18 and to be stretched along the edges as shown in Figures 7-9. As shown in Figures 7 and 8, each tensioning hook 19 is connected at a vertical pocket formed in the curtain 16, in which pocket a batten 23 is provided for controlling the shape of the curtain 16.

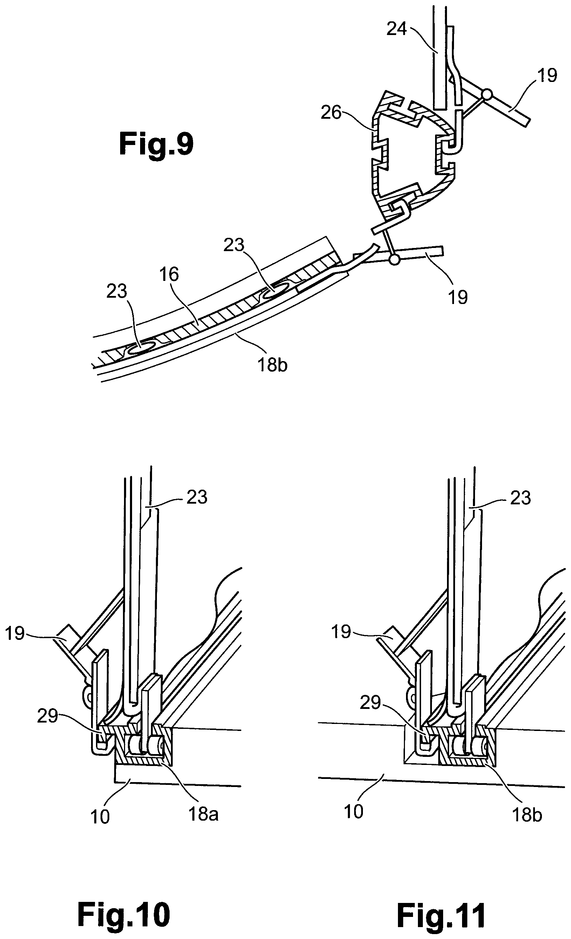

Each outer vertical post 15 may comprise a front member 25 and a rear member 26 (see Figure 3) positioned together at the rear end of the outer floor rail 18a for providing an aerodynamically efficient, rounded profile to air passing along the side of the cargo compartment when in motion. The inner posts 15 only comprise the member 26 for attaching the curtain 16 and the rear end access panel/door 24 as shown in Figure 9. The inner posts 15 may be detached to provide full width access to the rear end of the cargo compartment for loading/unloading, when the curtains are conventionally deployed.

In order to facilitate removable positioning of the inner posts 15, the ends of the posts can be provided with quick-release locking means interlocking with key-hole openings in the load bed floor and roof. Both front and rear post members 25, 26 may be manufactured as longitudinal, hollow profiles by aluminium extrusion. This results in low weight and makes it possible to provide the posts with an aerodynamically efficient closed cross section, including longitudinal slots for attaching the vertical edge of the curtain 16 and the tensioning hooks 19 or hinges for the access panel/door 24.

Figures 10 and 11 show an alternative embodiment where the floor rail system is substantively identical to the roof rail system, i.e. the floor rail system is adapted for travel of slides 28 within the rails in the same manner as the roof rail system. Thus, the floor rail system includes rail switches in the same manner as the roof rail system. Each slide 28 is connected to a batten 23 to secure the bottom edge of the curtain 16 to the load bed floor. For the purpose of providing attachment points for the tensioning hooks 19, the inner rails 18b have been modified with a hook extension 29 at the outside of the rail.

For example, the respective roof and floor rail systems can comprise more than one fork to allow for more alternatives for deploying the side curtain. This would make it possible to even more optimize the shape of the sides of the cargo compartment when the cargo load in the cargo compartment allows this.

## Claims

1. A commercial vehicle cargo box compartment (12) comprising front and rear (24) wall panels, a load bed floor (10), a roof (14) and at least one side curtain (15) which can be moved between a deployed position and a position for loading and unloading said cargo compartment from the side of the vehicle, wherein the side curtain (16) during said movement is guided at the roof by a rail (17), **characterized in that** the roof rail (17) is forked to allow the side curtain (16) to be deployed in more than one position, for providing adjustable width of the cargo compartment (12).

2. A commercial vehicle cargo compartment according to claim 1, **characterized in that** the roof rail (17) is provided with a rail switch (20) which in one set position allows a rear part of the side curtain (16) to angle inward toward the centre of the cargo compartment (12).

3. A commercial vehicle cargo compartment according to claim 2, **characterized in** an actuator for operating the roof rail switch (20).

4. A commercial vehicle cargo compartment according to claim 3, **characterized in that** the actuator is controlled via electric, hydraulic, pneumatic or mechanic energy control means.

5. A commercial vehicle cargo compartment according to claim 4, **characterized in that** the actuator is remotely controlled.

6. A commercial vehicle cargo compartment according to any one of claims 1-5, **characterized in that** the load bed floor (10) is provided with a forked floor rail (18, 18a, 18b) for the bottom edge of the side curtain at the load bed floor, below the roof rail (17, 17a, 17b).

7. A commercial vehicle cargo compartment according to claim 6, **characterized in that** the forked floor rail (18, 18a, 18b) is provided with a floor rail switch (20) which in one set position allows a rear part of the side curtain (16) to angle inward toward the centre of the cargo compartment (12).

8. A commercial vehicle cargo compartment according to any one of claims 1-7, **characterized in that** an upright post member (15) is positioned at the rear end of an outer rail (17a), extending between the load bed floor (10) and the roof (14).

9. A commercial vehicle cargo compartment according to claim 8, **characterized in that** each upright post (15) comprises a first front post member (25) which is mechanically connected both to the load bed floor (10) and the roof (14), and a second rear post member (26) which is movable between a first position substantially in line with the front post member (25) and a second position substantially in line with the rear ends of the inner roof and floor rails (17b, 18b) respectively.

10. A commercial vehicle cargo compartment according to any one of claims 8 or 9, **characterized in that** each post member (25, 26) is manufactured as a longitudinal, hollow profile by aluminium extrusion.

11. A commercial vehicle cargo compartment according to claim 9 or 10, **characterized in that** the front and rear post members (25, 26), when attached together, present an aerodynamically suitable, rounded cross section.

12. A ground travelling vehicle designed as a truck vehicle or a trailer adapted to be hauled by a truck, comprising a cargo compartment (12) according to any one of claims 1-11.

## Patentansprüche

1. Nutzfahrzeug-Frachtbehälterraum (12), der vordere und hintere (24) Wandplatten, einen Ladeflächenboden (10), ein Dach (14) und wenigstens einen Seitenvorhang (15) aufweist, der zwischen einer entfalteten Position und einer Position zum Beladen und Entladen des Frachtraums von der Seite des Fahrzeugs bewegt werden kann, wobei der Seitenvorhang (16) während der Bewegung am Dach durch eine Schiene (17) geführt wird, **dadurch gekennzeichnet, dass** die Dachschiene (17) gegabelt ist, um es dem Seitenvorhang (16) zu erlauben, in mehr als einer Position entfaltet zu werden, um eine anpassbare Breite des Laderaums (12) bereitzustellen.

2. Nutzfahrzeug-Frachtraum nach Anspruch 1, **dadurch gekennzeichnet, dass** die Dachschiene (17) mit einer Schienenweiche (20) versehen ist, die es in einer festgelegten Position einem hinteren Teil des Seitenvorhangs (16) erlaubt, zur Mitte des Frachtraums (12) hin nach innen abzuwinkeln.

3. Nutzfahrzeug-Frachtraum nach Anspruch 2, **gekennzeichnet durch** ein Stellglied zum Betätigen der Dachschienenweiche (20).

4. Nutzfahrzeug-Frachtraum nach Anspruch 3, **dadurch gekennzeichnet, dass** das Stellglied durch elektrische, hydraulische, pneumatische oder mechanische Energiesteuereinrichtungen gesteuert ist.

5. Nutzfahrzeug-Frachtraum nach Anspruch 4, **dadurch gekennzeichnet, dass** das Stellglied ferngesteuert ist.

6. Nutzfahrzeug-Frachtraum nach einem der Ansprüche 1-5, **dadurch gekennzeichnet, dass** der Ladeflächenboden (10) mit einer gegabelten Bodenschiene (18, 18a, 18b) für die untere Kante des Seitenvorhangs am Ladeflächenboden unter der Dachschiene (17, 17a, 17b) versehen ist.

7. Nutzfahrzeug-Frachtraum nach Anspruch 6, **dadurch gekennzeichnet, dass** die gegabelte Bodenschiene (18, 18a, 18b) mit einer Bodenschienenweiche (20) versehen ist, die es in einer festgelegten Position einem hinteren Teil des Seitenvorhangs (16) erlaubt, zur Mitte des Frachtraums (12) hin nach innen abzuwinkeln.

8. Nutzfahrzeug-Frachtraum nach einem der Ansprüche 1-7, **dadurch gekennzeichnet, dass** ein aufrecht stehendes Pfostenelement (15) am hinteren Ende einer Außenschiene (17a) positioniert ist, die sich zwischen dem Ladeflächenboden (10) und dem Dach (14) erstreckt.

9. Nutzfahrzeug-Frachtraum nach Anspruch 8, **dadurch gekennzeichnet, dass** jeder aufrecht stehende Pfosten (15) ein erstes vorderes Pfostenelement (25), das sowohl mit dem Ladeflächenboden (10) als auch dem Dach (14) mechanisch verbunden ist, und ein zweites hinteres Pfostenelement (26) aufweist, das zwischen einer ersten Position, die sich im Wesentlichen in einer Linie mit dem vorderen Pfostenelement (25) befindet, und einer zweiten Position bewegbar ist, die sich im Wesentlichen in einer Linie mit den hinteren Enden der inneren Dach- bzw. Bodenschiene (17b, 18b) befindet.

10. Nutzfahrzeug-Frachtraum nach einem der Ansprüche 8 oder 9, **dadurch gekennzeichnet, dass** jedes Pfostenelement (25, 26) als ein längliches, hohles Profil durch Aluminiumextrusion hergestellt ist.

11. Nutzfahrzeug-Frachtraum nach einem der Ansprüche 9 oder 10, **dadurch gekennzeichnet, dass** das vordere und das hintere Pfostenelement (25, 26), wenn sie miteinander verbunden sind, einen aerodynamisch geeigneten gerundeten Querschnitt aufweisen.

12. Landfahrzeug, das als ein Lastwagenfahrzeug oder als ein Anhänger, der dazu ausgelegt ist, von einem Lastwagen geschleppt zu werden, ausgebildet ist, das einen Frachtraum (12) nach einem der Ansprüche 1-11 aufweist.

## Revendications

1. Soute de véhicule utilitaire (12) comprenant des panneaux de paroi avant et arrière (24), un plancher de plateau de chargement (10), un toit (14) et au moins un rideau latéral (15) qui peut être déplacé entre une position déployée et une position de chargement et déchargement de ladite soute du côté du véhicule, où le rideau latéral (16) est guidé, pendant ledit mouvement, au niveau du toit par un rail (17), **caractérisée en ce que** le rail de toit (17) est en fourche pour permettre au rideau latéral (16) d'être déployé dans plus d'une position, pour fournir une largeur réglable de la soute (12).

2. Soute de véhicule utilitaire selon la revendication 1, **caractérisée en ce que** le rail de toit (17) est muni d'un aiguillage (20) qui dans une position déterminée permet à une partie arrière du rideau latéral (16) de s'incliner vers l'intérieur en direction du centre de la soute (12).

3. Soute de véhicule utilitaire selon la revendication 2, **caractérisée par** un actionneur pour faire fonctionner l'aiguillage de toit (20).

4. Soute de véhicule utilitaire selon la revendication 3, **caractérisée en ce que** l'actionneur est commandé par l'intermédiaire d'un moyen de commande d'énergie électrique, hydraulique, pneumatique ou mécanique.

5. Soute de véhicule utilitaire selon la revendication 4, **caractérisée en ce que** l'actionneur est commandé à distance.

6. Soute de véhicule utilitaire selon l'une quelconque des revendications 1 à 5, **caractérisée en ce que** le plancher de plateau de chargement (10) est muni d'un rail de plancher en fourche (18, 18a, 18b) pour le bord inférieur du rideau latéral au niveau du plancher de plateau de chargement, en-dessous du rail de toit (17, 17a, 17b).

7. Soute de véhicule utilitaire selon la revendication 6, **caractérisée en ce que** le rail de plancher en fourche (18, 18a, 18b) est muni d'un aiguillage de plancher (20) qui dans une position déterminée permet à une partie arrière du rideau latéral (16) de s'incliner vers l'intérieur en direction du centre de la soute (12).

8. Soute de véhicule utilitaire selon l'une quelconque des revendications 1 à 7, **caractérisée en ce qu'**un élément de montant vertical (15) est positionné à l'extrémité arrière d'un rail extérieur (17a), s'étendant entre le plancher de plateau de chargement (10) et le toit (14).

9. Soute de véhicule utilitaire selon la revendication 8, **caractérisée en ce que** chaque montant vertical (15) comprend un premier élément de montant avant (25) qui est relié mécaniquement à la fois au plancher de plateau de chargement (10) et au toit (14), et un deuxième élément de montant arrière (26) qui est mobile entre une première position sensiblement alignée avec l'élément de montant avant (25) et une deuxième position sensiblement alignée avec les extrémités arrière des rails de toit et de plancher intérieurs (17b, 18b) respectivement.

10. Soute de véhicule utilitaire selon l'une quelconque des revendications 8 ou 9, **caractérisée en ce que** chaque élément de montant (25, 26) est fabriqué sous la forme d'un profilé creux longitudinal par extrusion d'aluminium.

11. Soute de véhicule utilitaire selon la revendication 9 ou 10, **caractérisée en ce que** les éléments de montants avant et arrière (25, 26), lorsqu'ils sont fixés ensemble, présentent une section transversale arrondie aérodynamiquement appropriée.

12. Véhicule se déplaçant au sol conçu en tant que camion ou une remorque adapté pour être tracté par un camion, comprenant une soute (12) selon l'une quelconque des revendications 1 à 11.
